**Europäisches Patentamt**

**European Patent Office**

**Office européen des brevets**

(11) Veröffentlichungsnummer: **0 232 914**

**A1**

(12) **EUROPÄISCHE PATENTANMELDUNG**

(21) Anmeldenummer: **87101980.8**

(22) Anmeldetag: **12.02.87**

(51) Int. Cl.⁴: **A01G 13/10**

(30) Priorität: **12.02.86 DE 3604321**

(43) Veröffentlichungstag der Anmeldung:
**19.08.87 Patentblatt 87/34**

(84) Benannte Vertragsstaaten:
**AT BE CH DE FR IT LI NL**

(71) Anmelder: **Böck, Andreas**
**Stadel 17**
**D-8901 Dinkelscherben(DE)**

(72) Erfinder: **Böck, Andreas**
**Stadel 17**
**D-8901 Dinkelscherben(DE)**

(74) Vertreter: **Patentanwälte Dipl.-Ing. R. Holzer**
**Dipl.-Ing. (FH) W. Gallo**
**Philippine-Welser-Strasse 14**
**D-8900 Augsburg(DE)**

(54) **Schneckensperre.**

(57) Die Erfindung betrifft eine wirksame Schneckensperre in Form einer Bürste, bestehend aus einem
Trägerkörper (1, 2, 4) mit daran angeordneten, von
Schnecken nicht überwindbaren Borsten (3). Die
Schneckensperre kann als Beetumrandung mit am
Trägerkörper angeordneten Spießen (5) zum Einstecken in den Boden ausgebildet sein.

FIG. 1

EP 0 232 914 A1

## Schneckensperre

Die Erfindung betrifft eine Schneckensperre in Form eines Hindernisses.

Jeder Gartenbesitzer kennt die Schwierigkeit, Gemüse-oder Salatbeete wirksam gegen das Eindringen von Schnecken und die Gemüse und die Salate sowie auch Blumen und andere Pflanzen gegen Schneckenfraß zu schützen. An bisher vorgenommenen mannigfaltigen Versuchen zum Fernhalten der Schnecken fehlt es dabei nicht.

Mechanische Hindernisse erweisen sich als weitgehend unwirksam, da sie von den Schnecken kriechend ohne weiteres überwunden werden können. Gerade wenn solche Hindernisse feucht sind, was nachts, wenn die Schnecken besonders aktiv sind, durch nächtliche Taubildung fast immer der Fall ist, ist das Überwinden solcher Hindernisse für die Schnecken kein Problem. Dabei ist interessant, daß auch dünne und scharfkantige Hindernisse, beispielsweise gespannte Plastikfolien, von den Schnecken ohne weiteres überkrochen werden können; Versuche haben nachgewiesen, daß auch die Schreide einer Rasierklinge von den Schnecken ohne Verletzung überwunden werden kann. Daher war es bisher nicht möglich, ein wirksames mechanisches Hindernis für Schnecken zu - schaffen.

Aber auch andere Maßnahmen zur Schneckenbekämpfung erweisen sich als wenig wirkungsvoll. Die Verwendung von Schneckenkorn und anderen Giften schädigt das ökologische Gleichgewicht der Natur und gefährdet Vögel, Igel, Haustiere und Kinder und sollte deshalb möglichst unterbleiben. Außerdem bringt der Einsatz von Schneckenkorn auch nur wenig Erfolg, da es beim nächsten Regen mindestens teilweise wieder weggeschwemmt wird und hierdurch oder auch durch Gartenarbeiten bald wieder freie Gassen entstehen, durch welche die Schnecken Zugang finden.

Auch Hausmittel wie das Streuen von Asche, Herstellen von Bierfallen usw. bringen keinen dauerhaften Erfolg. Durch Tau oder Regen naßgewordene Asche kann die Schnecken nicht aufhalten, und aufgestellte Bierfallen locken die Schnecken aus dem weitesten Umkreis an und verstärken damit eher die Schneckenplage. Dazu muß man wissen, daß die als langsam geltenden Schnecken bei günstigen Witterungsverhältnissen - (Regen, Tau) ohne weiteres eine Strecke von ca. 130 Metern pro Nacht zurücklegen können. Außerdem ist das Beseitigen der Schnecken eine unappetitliche Angelegenheit.

Der Erfindung liegt daher die Aufgabe zugrunde, eine wirksame Schneckensperre zu - schaffen, die den Schnecken den Zutritt von damit geschützten Gemüse-oder Salatbeeten zuverlässig verwehrt.

Diese Aufgabe wird gemäß der Erfindung durch die im Hauptanspruch gekennzeichnete Schneckensperre gelöst.

Vorteilhafte Ausgestaltungen der Erfindung sind Gegenstand der Unteransprüche.

Praktische Versuche haben nachgewiesen, daß die Schnecken zwar die unmöglichsten mechanischen Hindernisse überwinden können, aber eine Bürste konnte von keiner Schnecke überwunden werden. Versuchsweise wurde in einem großen Aquarium auf dem Boden ein kleines Beet hergestellt und dieses mit Salat bepflanzt. Dieses Beet wurde mit Drahtbürsten umgeben, und die Seitenwände des Aquariums wurden in halber Höhe rundherum ebenfalls mit zugeschnittenen und aufgeklebten Drahtbürsten bestückt. Nun wurden außerhalb des Salatbeetes 100 Schnecken eingesetzt. Trotz Herstellung idealer Lebensbedingungen für Schnecken durch dauernde Besprühung und Erhöhung der Luftfeuchtigkeit gelang es während eines Zeitraums von 4 Monaten nicht einer einzigen Schnecke, in das Salatbeet hineinzukommen oder das Aquarium zu verlassen.

Zwei Ausführungsbeispiele der Erfindung werden nachstehend unter Bezugnahme auf die anliegenden Zeichnungen mehr im einzelnen erläutert.

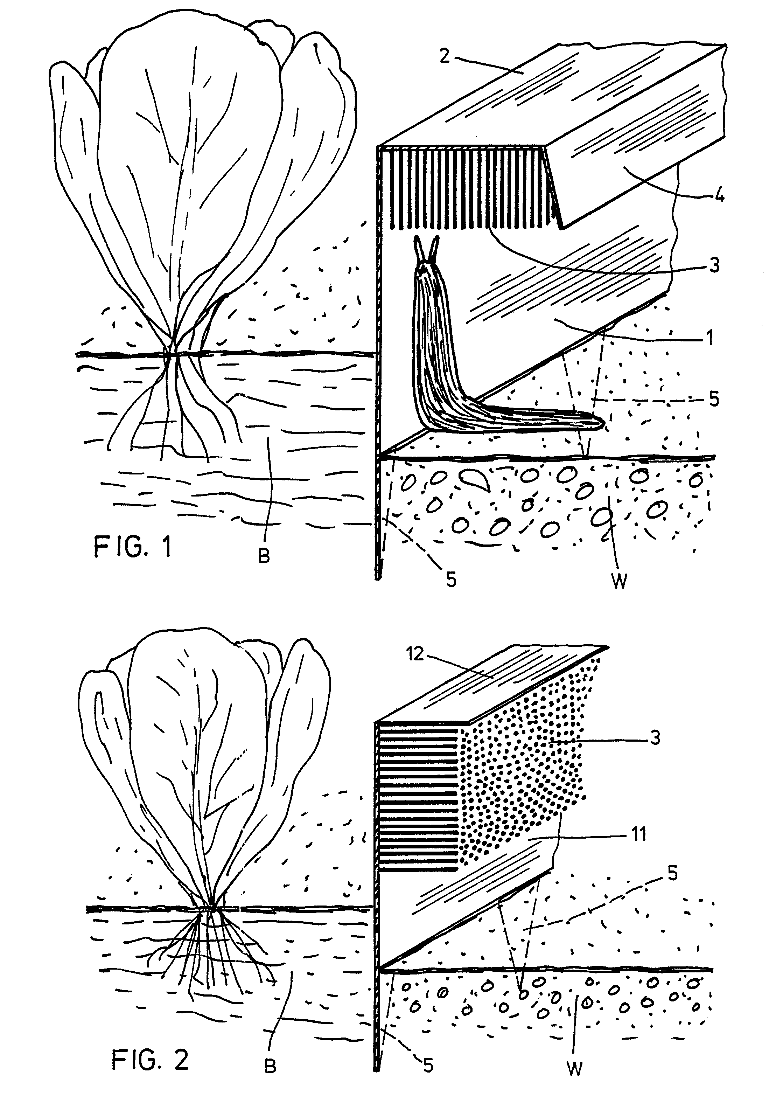

In den Zeichnungen zeigen die Fig. 1 und 2 zwei Ausführungsformen der erfindungsgemäßen Schneckensperre jeweils in geschnittener perspektivischer Darstellung.

Die in Fig. 1 dargestellte Schneckensperre ist als Beetumrandung ausgebildet und weist einen nach Art einer Profilschiene ausgebildeten Trägerkörper mit einem in seiner Gebrauchslage vertikalen, das Beet B begrenzenden Plattenschenkel 1 ohne Borsten, einen von dessen oberem Rand zur Beetaußenseite hin wegragenden, horizontalen (oder auch schräg verlaufenden) Plattenschenkel 2, der an seiner Unterseite mit Borsten 3 bestückt ist, und einen sich am freien Rand dieses borstenbestückten Plattenschenkels 2 anschließenden Abdeckschenkel 4 auf, der etwas - schräg · seitwärts abwärts (oder auch vertikal abwärts) ragt und die Borsten 3 so abdeckt, daß sich eine vom Weg W her gesehen optisch einwandfreie Beetumfassung ergibt. Der vertikale Plattenschenkel 1 ist in gewissen Abständen mit angeformten Spießen 5 zum Einstecken in den Boden ausgestattet.

Fig. 2 zeigt eine etwas einfachere, allerdings optisch weniger ansprechende Ausführungsform, bei welcher der Trägerkörper im Querschnitt ein L-Profil mit einem vertikalen Plattenschenkel 11, der mit den Borsten 3 bestückt ist, und einen von dessen oberem Rand aus zur Beetaußenseite wegragenden, etwa horizontalen Abdeckschenkel 12 aufweist, der die Anordnung der Borsten oben abdeckt. Angeformte Spieße 5 dienen wiederum zum Einstecken in den Boden.

Beide Ausführungsformen stellen für Schnecken unüberwindliche Hindernisse dar (wobei natürlich kein überhängendes Gras oder dgl. die Sperre "überbrücken" darf), und wegen der abgedeckten, abwärts bzw. seitwärts ragenden Borsten ist beim Betreten keine Verletzungsgefahr für Menschen oder Haustiere gegeben.

Beim Einsatz der erfindungsgemäßen Schneckensperre muß das geschützte Beet anfangs noch von Schnecken befreit werden, die aus noch im Boden vorhandenen Schneckeneiern ausschlüpfen können, aber neue Schnecken können nicht mehr in das Beet eindringen, so daß das umrandete Beet dann dauerhaft und zuverlässig schneckenfrei gehalten wird.

Als Material für die Schneckensperre eignet sich vorzugsweise Kunststoff, der witterungsunempfindlich und verrottungsfest ist. Dabei können der Trägerkörper 1, 2, 4 bzw. 11, 12 und die Borsten 3 miteinander einstückig aus Kunststoff hergestellt sein, beispielsweise im Spritzgußverfahren, oder die Borsten können wie bei üblichen Bürsten nach Vorfertigung des Trägerkörpers an diesem befestigt werden.

**Ansprüche**

1. Schneckensperre in Form eines mechanischen Hindernisses, dadurch gekennzeichnet, daß das Hindernis als Bürste mit von einem Trägerkörper (1, 2; 11) wegragenden Borsten (3) ausgebildet ist.

2. Schneckensperre nach Anspruch 1, dadurch gekennzeichnet, daß der Trägerkörper als Platte - (11) mit vertikaler Gebrauchsstellung ausgebildet ist, an welcher die Borsten (3) seitwärts wegragend angeordnet sind.

3. Schneckensperre nach Anspruch 2, dadurch gekennzeichnet, daß sich an die Oberkante der Platte (11) ein ebenfalls seitwärts ragender, die Anordnung der Borsten (3) oben abdeckender Plattenschenkel (12) anschließt.

4. Schneckensperre nach Anspruch 1, dadurch gekennzeichnet, daß der Trägerkörper (1, 2) als im Querschnitt L-förmige Platte ausgebildet ist, die einen in der Gebrauchslage vertikalen Abdeckschenkel (1) ohne Borsten und einen sich an dessen Oberkante anschließenden, in der Gebrauchslage seitwärts ragenden Plattenschenkel (2) mit den an dessen Unterseite angeordneten Borsten - (3) aufweist.

5. Schneckensperre nach Anspruch 4, dadurch gekennzeichnet, daß sich an die freie Kante des die Borsten (3) tragenden, seitwärts ragenden Plattenschenkels (2) noch ein die Anordnung der Borsten seitlich mindestens im wesentlichen abdeckender, nach unten ragender Abdeckschenkel - (4) anschließt.

6. Schneckensperre nach einem der Ansprüche 1 bis 5, dadurch gekennzeichnet, daß der Trägerkörper (1, 2; 11) mit Einsteckspießen (5) zum Einstecken in den Boden ausgestattet ist.

7. Schneckensperre nach einem der Ansprüche 1 bis 6, dadurch gekennzeichnet, daß Trägerkörper (1, 2; 11) und Borsten (3) miteinander einstückig aus Kunststoff hergestellt sind.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-A-3 336 133 (KISSEL) <br> * Insgesamt * | 1,4,5 | A 01 G 13/10 |
| Y | | 2,3,6, 7 | |
| | --- | | |
| Y | CH-A- 639 242 (MÜLLER) <br> * Insgesamt * | 2,3 | |
| | --- | | |
| Y | GB-A-2 150 016 (VERMEULEN) <br> * Zusammenfassung * | 7 | |
| | --- | | |
| Y | CH-A- 467 007 (PFAU) <br> * Spalte 3, Zeilen 16-27; Figur 2 * | 6 | |
| | ----- | | |

RECHERCHIERTE SACHGEBIETE (Int. Cl.4)

A 01 G
A 46 B

Der vorliegende Recherchenbericht wurde für alle Patentansprüche erstellt.

| Recherchenort | Abschlußdatum der Recherche | Prüfer |
|---|---|---|
| DEN HAAG | 13-05-1987 | HERYGERS J.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82